# DEMANDE DE BREVET EUROPEEN

(11) **EP 3 184 356 A1**
(43) Date de publication de la demande: **28.06.2017**
(21) Numéro de dépôt: 16206382.0
(22) Date de dépôt: 22.12.2016
(51) Int. Cl.: B60N 2/48

(54) **APPUI-TÊTE DE SIÈGE DE VÉHICULE AUTOMOBILE**

(30) Priorité: 22.12.2015 FR 1563154
(71) Demandeur: Cera TSC, 75008 Paris (FR)
(72) Inventeur: BONTE, Emmanuel, 51100 Reims (FR)
(74) Mandataire: Sayettat, Julien Christian

(57) **Abrégé**

L'invention concerne un appui-tête (1) comprenant une zone crantée (4) pourvue d'une pluralité de crans (5) et un loquet (6), ledit loquet une fois disposé dans sa position de déverrouillage est encore partiellement engagé dans le cran actif ; ledit loquet est monté de manière à pouvoir adopter une position d'écartement extrême, située au-delà de sa position de déverrouillage, dans laquelle il n'est plus engagé dans ledit cran actif ; les géométries respectives dudit loquet et de la zone de jonction entre deux crans (5) successifs sont agencées de sorte que, lorsque ledit loquet est disposé dans sa position de déverrouillage, un effort appliqué sur la structure pour l'amener vers une nouvelle position de réglage s'accompagne d'un escamotage temporaire dudit loquet vers sa position extrême, par appui exercé par ladite zone sur ledit loquet, pour permettre le passage dudit loquet dudit cran actif à un nouveau cran (5).

## Description

L'invention concerne un appui-tête de siège de véhicule automobile.

Il est connu de réaliser un appui-tête de siège de véhicule automobile, ledit appui-tête comprenant :
- une armature de montage sur un dossier dudit siège,
- une structure rigide montée de manière mobile sur ladite armature, de manière à pouvoir adopter une pluralité de positions de réglage, ladite structure étant destinée à être recouverte par un coussin,
   ledit appui-tête comprenant en outre un dispositif de réglage, ledit dispositif comprenant :
   - une zone crantée pourvue d'une pluralité de crans, ladite zone étant montée solidairement à ladite armature - respectivement ou à ladite structure -,
   - un loquet monté mobile solidairement à ladite structure - respectivement ou à ladite armature - de manière à pouvoir adopter :
      o une position de verrouillage, où il est engagé dans au moins un desdits crans, formant cran actif, pour bloquer ladite structure dans la position de réglage choisie,
      o et une position de déverrouillage, où il est écarté de manière à permettre un réglage de la position de ladite structure,
   - un ressort d'actionnement dudit loquet vers sa position de verrouillage,
   - un moyen d'actionnement dudit loquet vers sa position de déverrouillage.

Cependant, un tel agencement présente les inconvénients suivants :
- avec un tel réglage selon un nombre fini de positions, l'occupant du siège ne reçoit pas l'information selon laquelle la position de réglage sélectionnée est verrouillée,
- si la structure est disposée dans une position intermédiaire entre deux positions de réglage, on peut se retrouver, du fait du basculement possible dans l'une ou l'autre de deux positions de réglages adjacentes, dans une position de réglage non souhaitée nécessitant un nouveau réglage,
- il se peut aussi que la structure reste en équilibre dans une position intermédiaire non verrouillée et que le verrouillage ne se produise qu'en cas décélération brutale du véhicule, ce qui est dangereux pour l'occupant,
- une telle décélération peut, lorsqu'elle est très brutale, conduire même à un non verrouillage de la structure avant sa fin de course, ce qui est d'autant plus dangereux pour l'occupant.

L'invention a pour but de pallier ces inconvénients.

A cet effet, l'invention propose un appui-tête de siège de véhicule automobile, ledit appui-tête comprenant :
- une armature de montage sur un dossier dudit siège,
- une structure rigide montée de manière mobile sur ladite armature, de manière à pouvoir adopter une pluralité de positions de réglage, ladite structure étant destinée à être recouverte par un coussin,
   ledit appui-tête comprenant en outre un dispositif de réglage, ledit dispositif comprenant :
   - une zone crantée pourvue d'une pluralité de crans, ladite zone étant montée solidairement à ladite armature - respectivement ou à ladite structure -,
   - un loquet monté mobile solidairement à ladite structure - respectivement ou à ladite armature - de manière à pouvoir adopter :
      o une position de verrouillage, où il est engagé dans au moins un desdits crans, formant cran actif, pour bloquer ladite structure dans la position de réglage choisie,
      o et une position de déverrouillage, où il est écarté de manière à permettre un réglage de la position de ladite structure,
   - un ressort d'actionnement dudit loquet vers sa position de verrouillage,
   - un moyen d'actionnement dudit loquet vers sa position de déverrouillage, ledit appui-tête présentant en outre les caractéristiques suivantes :
      - ledit loquet une fois disposé dans sa position de déverrouillage est encore partiellement engagé dans ledit cran actif,
      - ledit loquet est monté de manière à pouvoir adopter en outre une position d'écartement extrême, située au-delà de sa position de déverrouillage, dans laquelle il n'est plus engagé dans ledit cran actif,
      - les géométries respectives dudit loquet et de la zone de jonction entre deux crans successifs sont agencées de sorte que, lorsque ledit loquet est disposé dans sa position de déverrouillage, un effort appliqué sur ladite structure pour l'amener vers une nouvelle position de réglage s'accompagne d'un escamotage temporaire dudit loquet vers sa position extrême, par appui exercé par ladite zone sur ledit loquet, pour permettre le passage dudit loquet dudit cran actif à un nouveau cran.

Dans cette description, les termes de positionnement dans l'espace (haut, longitudinal, transversal, latéral, avant, arrière, vertical, horizontal,...) sont pris en référence à l'appui-tête disposé en situation d'utilisation dans le véhicule.

Le terme « radial » est considéré par rapport à l'axe médian selon lequel s'étend une tige.

Avec l'agencement proposé l'occupant du siège reçoit l'information selon laquelle la position de réglage sélectionnée est verrouillée.

De ce fait, on évite de se retrouver dans une situation ou la structure est disposée dans une position intermédiaire entre deux positions de réglage, ce qui évite tout risque que, en cas de décélération brutale du véhicule, la structure se déplace dans une position non optimale pour assurer la sécurité de l'occupant du siège.

D'autres particularités et avantages de l'invention apparaîtront dans la description qui suit, faite en référence aux figures jointes, dans lesquelles :

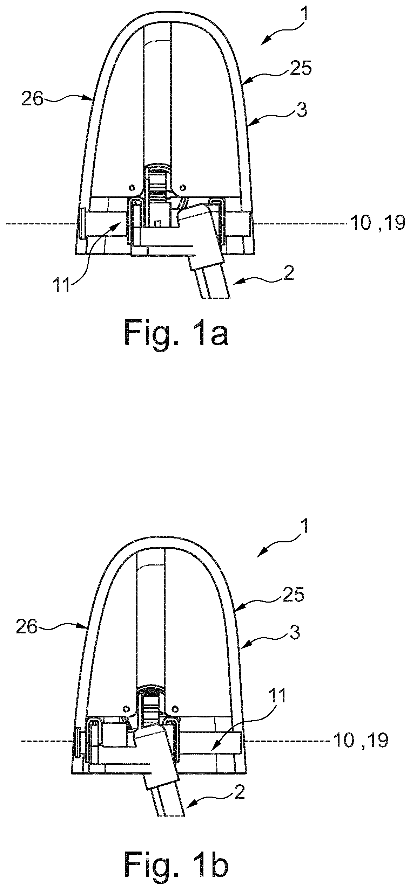

- les figures 1a et 1b sont des vues latérales partielles en semi-coupe d'un appui-tête selon une réalisation, la structure étant réglée en positions extrêmes arrière (1a) et avant (1 b),

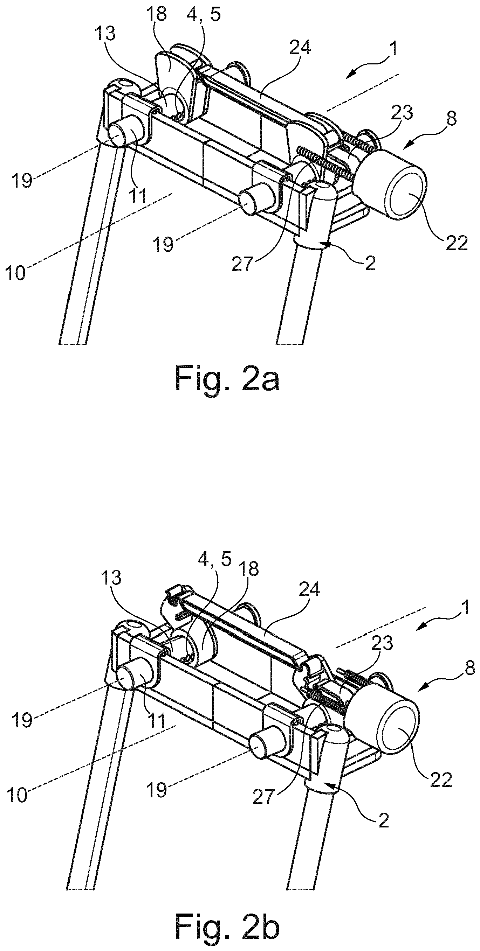

- les figures 2a et 2b sont des vues en perspective partielle de l'appui-tête des figures 1, le moyen d'actionnement étant non activé (2a) et activé (2b),
- les figures 3a et 3b sont des vues en coupe horizontale de l'appui-tête des figures précédentes, le moyen d'actionnement étant non activé (3a) et activé (3b),
- les figures 4a et 4b sont des vues de détail respectives des figures 3a et 3b,
- les figures 5a à 5c sont des vues partielles en coupe horizontale de l'appui-tête des figures précédentes, le loquet étant en position de verrouillage (5a), de déverrouillage (5b) et d'écartement extrême avec le loquet disposé entre deux crans (5c).

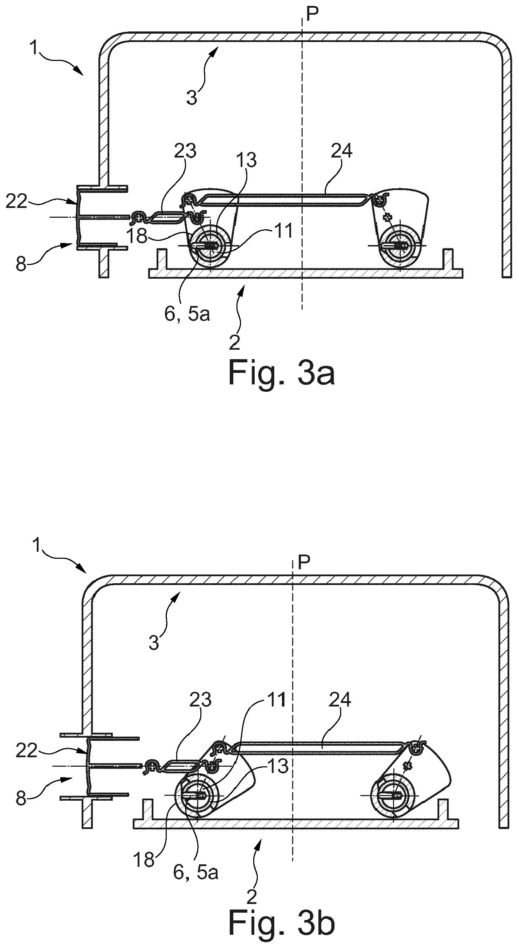

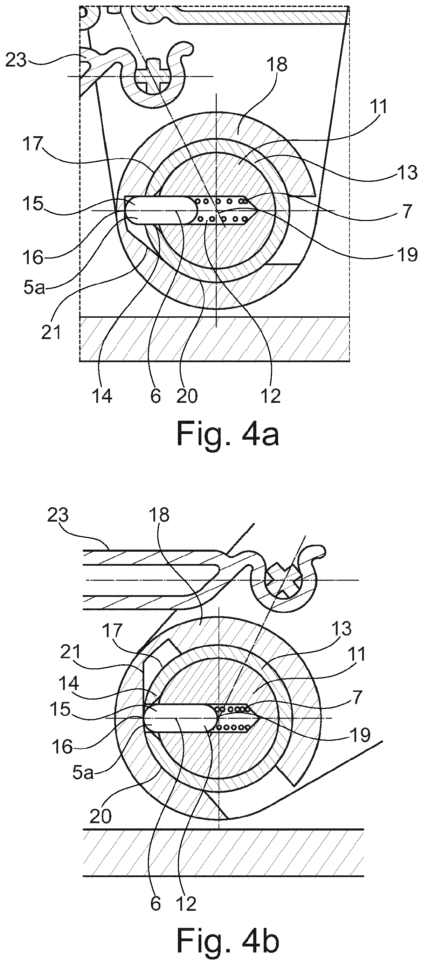

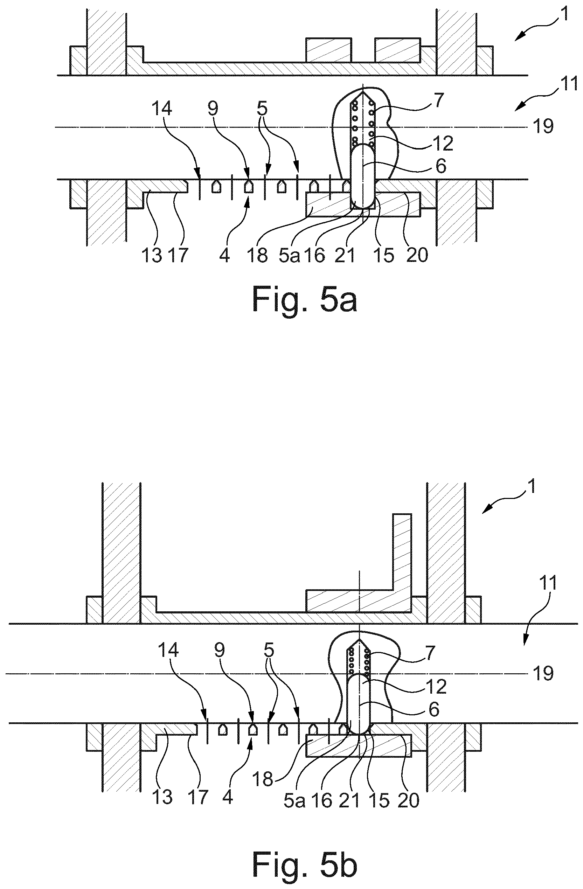

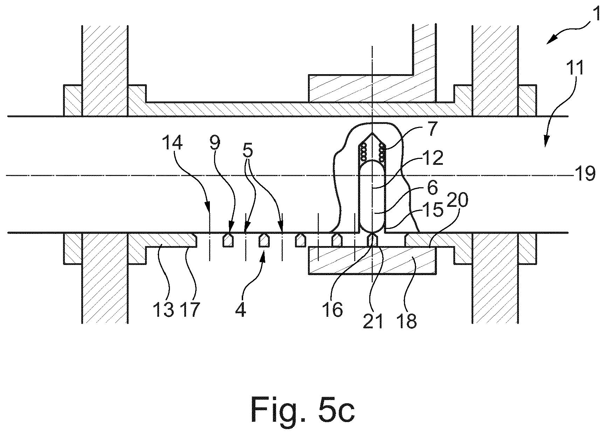

En référence aux figures, on décrit un appui-tête 1 de siège de véhicule automobile, ledit appui-tête comprenant :
- une armature 2 de montage sur un dossier dudit siège,
- une structure 3 rigide - notamment à base de matériau plastique moulé - montée de manière mobile sur ladite armature, de manière à pouvoir adopter une pluralité de positions de réglage, ladite structure étant destinée à être recouverte par un coussin non représenté,
   ledit appui-tête comprenant en outre un dispositif de réglage, ledit dispositif comprenant :
   - une zone crantée 4 pourvue d'une pluralité de crans 5, ladite zone étant montée solidairement à ladite armature - respectivement ou à ladite structure en variante non représentée -,
   - un loquet 6 monté mobile solidairement à ladite structure- respectivement ou à ladite armature en variante non représentée - de manière à pouvoir adopter :
      o une position de verrouillage (figures 3a,4a,5a), où il est engagé dans au moins un desdits crans - un seul dans la réalisation représentée, ou plusieurs en variante non représentée -, formant cran actif 5a, pour bloquer ladite structure dans la position de réglage choisie,
      o et une position de déverrouillage (figures 3b,4b,5b), où il est écarté de manière à permettre un réglage de la position de ladite structure,
   - un ressort 7 d'actionnement dudit loquet vers sa position de verrouillage,
   - un moyen d'actionnement 8 dudit loquet vers sa position de déverrouillage,
      ledit appui-tête présentant en outre les caractéristiques suivantes :
      - ledit loquet une fois disposé dans sa position de déverrouillage est encore partiellement engagé dans ledit cran actif,
      - ledit loquet est monté de manière à pouvoir adopter en outre une position d'écartement extrême (figure 5c), située au-delà de sa position de déverrouillage, dans laquelle il n'est plus engagé dans ledit cran actif,
      - les géométries respectives dudit loquet et de la zone de jonction 9 entre deux crans 5 successifs sont agencées de sorte que, lorsque ledit loquet est disposé dans sa position de déverrouillage, un effort appliqué sur ladite structure pour l'amener vers une nouvelle position de réglage s'accompagne d'un escamotage temporaire dudit loquet vers sa position extrême, par appui exercé par ladite zone sur ledit loquet, pour permettre le passage dudit loquet dudit cran actif à un nouveau cran 5.

Selon la réalisation représentée, la zone crantée 4 s'étend selon un axe de réglage 10, la structure 3 étant montée en translation parallèlement audit axe, de manière à permettre son réglage en translation selon ledit axe.

Selon la réalisation représentée, l'axe de réglage 10 s'étend longitudinalement, de manière à permettre un réglage longitudinal de la structure 3.

En variante non représentée, l'axe de réglage 10 s'étend sensiblement verticalement, de manière à permettre un réglage en hauteur de la structure 3.

Selon une réalisation non représentée, la zone crantée 4 s'étend selon un plan longitudinal vertical, les crans 5 formant un réseau croisé selon deux directions sensiblement horizontale et verticale, la structure 3 étant montée mobile longitudinalement et verticalement de manière à permettre son réglage longitudinal et en hauteur.

Un appui-tête 1 pourvu d'un réglage basé sur un tel principe est notamment décrit dans le document EP-2 953 816-A1.

Selon une autre réalisation non représentée, la zone crantée 4 s'étend selon un arc de cercle, la structure 3 étant montée en rotation selon un axe transversal, de manière à permettre un réglage en inclinaison de ladite structure.

Selon la réalisation représentée, l'appui-tête 1 est pourvu d'une structure 3 réglable selon un axe de réglage 10, le dispositif de réglage comprenant en outre :
- une tige 11 solidaire de la structure 3, ladite tige s'étendant parallèlement audit axe de réglage - ici longitudinal-, ladite tige comprenant un logement 12 de réception en coulissement radial d'un loquet 6 en forme de doigt, ledit doigt étant poussé vers l'extérieur par un ressort 7,
- un fourreau 13 de réception de ladite tige en coulissement, ledit fourreau étant solidaire de l'armature 2, ledit fourreau étant pourvu de crans 5 en forme d'orifices alignés de manière à former la zone crantée 4, les ouvertures internes 14 desdits orifices présentant une forme évasée coopérant avec une forme en ogive donnée à la partie extrême libre 15 dudit doigt, de manière à permettre le passage dudit doigt d'un cran actif 5a à un autre cran 5, ledit doigt adoptant temporairement sa position d'écartement extrême, lorsque l'extrémité libre 16 dudit doigt affleure la paroi externe 20 dudit fourreau,
- une bague 18 entourant ledit fourreau de manière à pouvoir coulisser dessus et à pouvoir tourner selon l'axe médian 19 selon lequel s'étend ladite tige, ladite bague comprenant sur sa face interne 20 une zone formant surface de came 21 recevant ladite extrémité libre formant suiveur de came, ladite surface étant agencée de sorte que :
   o quand ladite bague est dans une première position angulaire, ladite extrémité libre est saillante vers l'extérieur par rapport à ladite paroi externe, de manière à bloquer ledit doigt en position de verrouillage dans le cran actif 5a,
   o quand ladite bague est amenée dans une deuxième position angulaire, ladite extrémité libre se rétracte progressivement vers l'intérieur de manière venir en position de déverrouillage en affleurement de ladite paroi externe, le moyen d'actionnement 8 étant monté solidairement à ladite structure et étant relié à ladite bague de manière à permettre, lorsqu'il est actionné, la rotation de ladite bague depuis sa première position vers sa deuxième position.

Selon la réalisation représentée, l'appui-tête 1 comprend deux dispositifs de réglage disposés de façon sensiblement symétrique de part et d'autre d'un plan longitudinal vertical médian P, le moyen d'actionnement 8 étant commun auxdits dispositifs.

Une telle réalisation permet d'assurer un parfait coulissement de la structure 3, même en cas d'effort appliqué latéralement pour réaliser le réglage.

Selon la réalisation représentée, le moyen d'actionnement 8 comprend un bouton poussoir 22 et une biellette 23 de transmission qui lui est reliée, ladite biellette étant articulée à une bague 18 de manière à l'activer en rotation lorsque ledit bouton est actionné.

Selon la réalisation représentée, le moyen d'actionnement comprend en outre une bielle 24 reliant les bagues 18 entre elles, de manière à permettre leur rotation simultanée quand le bouton 22 est actionné.

Selon la réalisation représentée, la structure 3 présente une section verticale longitudinale en forme générale de U renversé, de manière à définir un corps creux présentant une paroi avant 25 et une paroi arrière 26, les tiges 11 s'étendant entre lesdites parois et y étant reliées par leurs extrémités.

Selon la réalisation représentée, le bouton 22 est mis en contrainte par au moins un - et en particulier deux dans la réalisation représentée - ressort 27 d'actionnement vers sa position non appuyée.

Selon une réalisation non représentée, l'axe de réglage 10 peut être prévu sensiblement vertical, de manière à permettre un réglage en hauteur de la structure 3.

## Revendications

1. Appui-tête (1) de siège de véhicule automobile, ledit appui-tête comprenant :
• une armature (2) de montage sur un dossier dudit siège,
• une structure (3) rigide montée de manière mobile sur ladite armature, de manière à pouvoir adopter une pluralité de positions de réglage, ladite structure étant destinée à être recouverte par un coussin,
ledit appui-tête comprenant en outre un dispositif de réglage, ledit dispositif comprenant :
• une zone crantée (4) pourvue d'une pluralité de crans (5), ladite zone étant montée solidairement à ladite armature - respectivement ou à ladite structure -,
• un loquet (6) monté mobile solidairement à ladite structure - respectivement ou à ladite armature - de manière à pouvoir adopter :
o une position de verrouillage, où il est engagé dans au moins un desdits crans, formant cran actif (5a), pour bloquer ladite structure dans la position de réglage choisie,
o et une position de déverrouillage, où il est écarté de manière à permettre un réglage de la position de ladite structure,
• un ressort (7) d'actionnement dudit loquet vers sa position de verrouillage,
• un moyen d'actionnement (8) dudit loquet vers sa position de déverrouillage,
ledit appui-tête étant **caractérisé en ce que** :
• ledit loquet une fois disposé dans sa position de déverrouillage est encore partiellement engagé dans ledit cran actif,
• ledit loquet est monté de manière à pouvoir adopter en outre une position d'écartement extrême, située au-delà de sa position de déverrouillage, dans laquelle il n'est plus engagé dans ledit cran actif,
• les géométries respectives dudit loquet et de la zone de jonction (9) entre deux crans (5) successifs sont agencées de sorte que, lorsque ledit loquet est disposé dans sa position de déverrouillage, un effort appliqué sur ladite structure pour l'amener vers une nouvelle position de réglage s'accompagne d'un escamotage temporaire dudit loquet vers sa position extrême, par appui exercé par ladite zone sur ledit loquet, pour permettre le passage dudit loquet dudit cran actif à un nouveau cran (5).

2. Appui-tête selon la revendication 1, **caractérisé en ce que** la zone crantée (4) s'étend selon un axe de réglage (10), la structure (3) étant montée en translation parallèlement audit axe, de manière à permettre son réglage en translation selon ledit axe.

3. Appui-tête selon la revendication 2, **caractérisé en ce que** l'axe de réglage (10) s'étend longitudinalement, de manière à permettre un réglage longitudinal de la structure (3).

4. Appui-tête selon la revendication 2, **caractérisé en ce que** l'axe de réglage (10) s'étend sensiblement verticalement, de manière à permettre un réglage en hauteur de la structure (3).

5. Appui-tête selon la revendication 1, **caractérisé en ce que** la zone crantée (4) s'étend selon un plan longitudinal vertical, les crans (5) formant un réseau croisé selon deux directions sensiblement horizontale et verticale, la structure (3) étant montée mobile longitudinalement et verticalement de manière à permettre son réglage longitudinal et en hauteur.

6. Appui-tête selon la revendication 1, **caractérisé en ce que** la zone crantée (4) s'étend selon un arc de cercle, la structure (3) étant montée en rotation selon un axe transversal, de manière à permettre un réglage en inclinaison de ladite structure.

7. Appui-tête selon l'une quelconque des revendications 2 à 4, **caractérisé en ce que** le dispositif de réglage comprend en outre :
• une tige (11) solidaire de la structure (3), ladite tige s'étendant parallèlement à l'axe de réglage (10), ladite tige comprenant un logement (12) de réception en coulissement radial d'un loquet (6) en forme de doigt, ledit doigt étant poussé vers l'extérieur par un ressort (7),
• un fourreau (13) de réception de ladite tige en coulissement, ledit fourreau étant solidaire de l'armature (3), ledit fourreau étant pourvu de crans (5) en forme d'orifices alignés de manière à former la zone crantée (4), les ouvertures internes (14) desdits orifices présentant une forme évasée coopérant avec une forme en ogive donnée à la partie extrême libre (15) dudit doigt, de manière à permettre le passage dudit doigt d'un cran actif (5a) à un autre cran (5), ledit doigt adoptant temporairement sa position d'écartement extrême, lorsque l'extrémité libre (16) dudit doigt affleure la paroi externe (17) dudit fourreau,
• une bague (18) entourant ledit fourreau de manière à pouvoir coulisser dessus et à pouvoir tourner selon l'axe médian (19) selon lequel s'étend ladite tige, ladite bague comprenant sur sa face interne (20) une zone formant surface de came (21) recevant ladite extrémité libre formant suiveur de came, ladite surface étant agencée de sorte que :
o quand ladite bague est dans une première position angulaire, ladite extrémité libre est saillante vers l'extérieur par rapport à ladite paroi externe, de manière à bloquer ledit doigt en position de verrouillage dans le cran actif (5a),
o quand ladite bague est amenée dans une deuxième position angulaire, ladite extrémité libre se rétracte progressivement vers l'intérieur de manière venir en position de déverrouillage en affleurement de ladite paroi externe, le moyen d'actionnement (8) étant monté solidairement à ladite structure et étant relié à ladite bague de manière à permettre, lorsqu'il est actionné, la rotation de ladite bague depuis sa première position vers sa deuxième position.

8. Appui-tête selon la revendication 7, **caractérisé en ce qu'**il comprend deux dispositifs de réglage disposés de façon sensiblement symétrique de part et d'autre d'un plan longitudinal vertical médian (P), le moyen d'actionnement (8) étant commun auxdits dispositifs.
